# EUROPEAN PATENT APPLICATION

(11) **EP 1 746 562 A2**
(43) Date of publication of application: **24.01.2007**
(21) Application number: 06012609.1
(22) Date of filing: 20.06.2006
(51) Int. Cl.: G09G 3/04

(54) **Apparatus and method for controlling display segments**

(30) Priority: 22.07.2005 KR 20050066947
(71) Applicant: Samsung Electronics Co., Ltd., Suwon-si, Gyeonggi-Do (KR)
(72) Inventor: You, Byeong-Gyun 935-1202, Samsung Taeyoung Apt., Suwon-si Gyeonggi-do (KR)
(74) Representative: Lang, Johannes

(57) **Abstract**

An apparatus and a method for controlling display segments supply data to be displayed for each segment of a display panel, and display the supplied data according to each segment of the display panel for a predetermined time period. The supplying and the displaying of the data are performed repeatedly a predetermined number of times with respect to all of the segments to be displayed. By using residual image effects, it is possible to create the effect of data being displayed on whole segments. As a result, the number of registers for controlling the display segments is reduced, thereby producing economically advantageous effects.

## Description

### BACKGROUND OF THE INVENTION

### Technical Field

The present invention relates to an apparatus and a method for controlling display segments. More particularly, the invention relates to an apparatus and a method which can reduce the number of registers in use for the control of a display panel, which displays the operation status of, for example, a settop box.

### Related Art

A settop box is a control box capable of receiving broadcasts and realizing various additional functions, and can be expressed as a digital broadcast receiver. Before digital broadcasting was widely provided, the settop box received broadcast data from a specific broadcaster as its main function. However, due to accelerated digitization, the settop box has developed to the point where various functions, such as communication, personal image data storage and electronic program guidance, in addition to conventional broadcast receiving, have been realized.

For the purpose of examining the running status of a settop box, segments are provided on a settop box panel. That is, a segment functions to display the running status of the settop box. Running status information expressed by the display segment may include visual information, channel information, and so forth.

A settop box processor transmits information through serial connection to a panel on a settop box in order to display the running status.

A panel capable of expressing four digits is used, and one register is used to control each respective digit. A first register is connected to digit I or DIGITd1, a second register is connected to digit 2, a third register is connected to digit 3, and a fourth register is connected to digit 4. Serial data and control signals are inputted from a processor to the four registers. The registers output the inputted serial data by converting it to eight bit parallel data, each being given to a respective digit of the display panel.

Such a settop box, however, needs as many registers as there are digits for the segments. When shift registers are attached in a number equal to the number of digits for the display segments so as to maintain the status of the digits, the price of the settop box rises in proportion to the number of shift registers.

Accordingly, there is a need to decrease the number of registers for controlling display segments.

### SUMMARY OF THE INVENTION

The present invention has been developed to solve the foregoing problems of the prior art, and it is therefore an object of the present invention to provide an apparatus and a method for controlling display segments, which are designed to display device status, with a single register by using a suitable control signal and a residual image.

According to an aspect of the invention for realizing the above objects, an apparatus for controlling display segments comprises: a display unit for displaying input data to be displayed sequentially according to each segment of a display panel; and a controller for supplying display data to be displayed on each segment of the display panel, and for controlling the display data to be displayed according to each segment of the display panel in a predetermined time period, so that the data is repeatedly displayed a predetermined number of times.

The number of display repetitions is set to a maximum so as to create the illusion of data being displayed on whole segments at the same time, the repetition number preferably being set to 60 to 100 times per second.

Preferably, the display unit includes: a register for outputting input data to be displayed by converting serial format into parallel format; and a display panel for displaying parallel data inputted from the register sequentially according to each segment.

Preferably, the controller supplies at least one of a clock set in use for the selection of a displaying segment, serial data including information to be displayed on a segment, a clock pulse in use for the transmission of the serial data, and a reference clock including a display instruction signal pertaining to display data for each segment.

Preferably, at least one signal supplied to the display unit is transmitted via a General Purpose Input/Output Pin (GPIO).

According to another aspect of the invention for realizing the above objects, a digital broadcast receiving system is provided for displaying data to be displayed on each segment of a display panel displaying running status, the broadcast receiving system displaying the display data sequentially according to each segment of the display panel for a predetermined time period, and repeatedly displaying the segment a predetermined of times.

According to yet another aspect of the invention for realizing the above objects, a method for controlling display segments comprises the steps of: supplying display data to be displayed to each segment of a display panel; and displaying the supplied display data according to each segment of the display panel for a predetermined time period. The supplying step and the displaying step are perfonned repeatedly a predetermined number of times with respect to all of the segments to be displayed.

Preferably, the supplying step uses a clock set in use for the selection of a displaying segment, serial data including information to be displayed on one segment, and a clock pulse in use for the transmission of the serial data.

Preferably, the displaying step uses a reference clock, including a display instruction signal pertaining to the display data, for each segment.

### BRIEF DESCRIPTION OF THE DRAWINGS

A more complete appreciation of the invention and many of the attendant advantages thereof, will be readily apparent as the same becomes better understood by reference to the following detailed description when considered in conjunction with the accompanying drawings in which like reference symbols indicate the same or similar components, wherein:
FIG. 1 is a block diagram illustrating a settop box panel display;
FIG. 2 is a block diagram illustrating a digital broadcast receiving system to which the invention is applicable;
FIG. 3 is a block diagram illustrating a status display unit of the invention;
FIG. 4 is a diagram illustrating clock timing for display control of the invention; and
FIG. 5 is a flowchart illustrating a display segment control process using a single register according to an embodiment of the invention.

### DETAILED DESCRIPTION OF THE INVENTION

Hereinafter preferred embodiments of the invention will be described in detail with reference to the drawings.

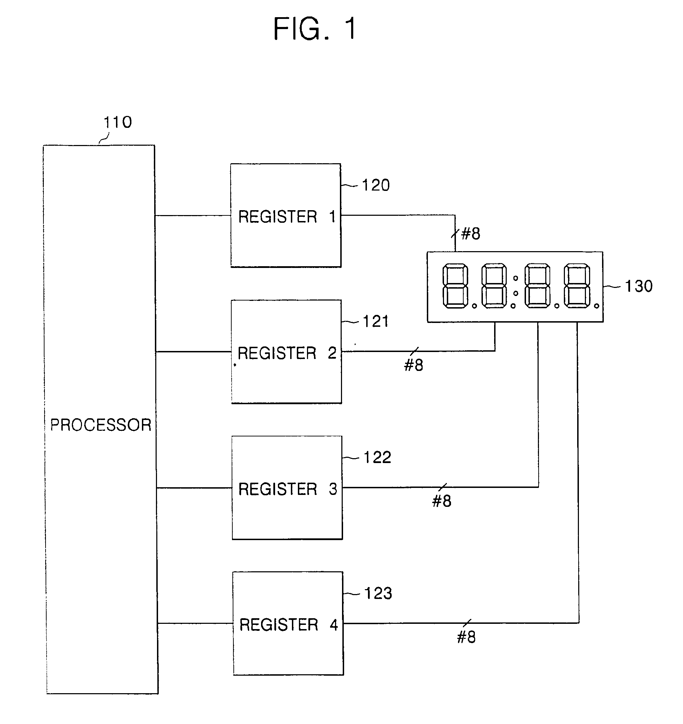

FIG. 1 is a block diagram illustrating a settop box panel display.

A settop box processor transmits information through serial connection to a panel on a settop box in order to display running status. As shown in FIG. 1, each digit displayed by segments is connected to a respective register.

In FIG. 1, a panel capable of expressing four digits is shown, and four registers are used to control the respective digits. Register 120 is connected to digit 1 or DIGITd1, register 121 is connected to digit 2, register 122 is connected to digit 3, and register 4 is connected to digit 4. Serial data and control signals are inputted from a processor 110 to the registers 120, 121, 122 and 123. The registers 120, 121, 122 and 123 output the inputted serial data by converting the data to eight bit parallel data, each being given to a respective digit of the display panel 130.

However, as shown in FIG. 1, the number of needed registers is equal to the number of digits for the segments. When shift registers are attached in a number equal to the number of digits for the display segments to maintain the status of the digits, the price of the settop box rises in proportion to the number of shift registers.

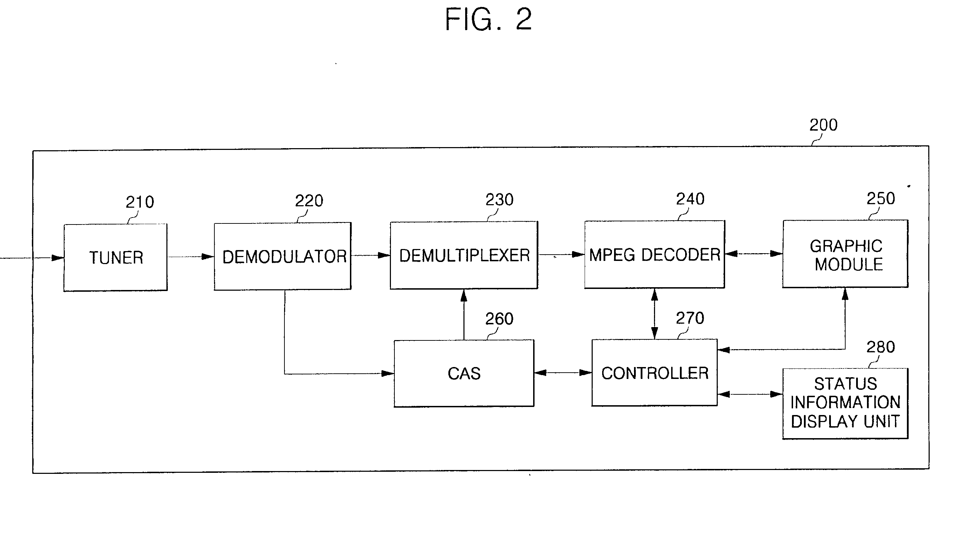

FIG. 2 is a block diagram illustrating a digital broadcast receiving system to which the invention is applied.

The digital broadcast receiving system 200 of FIG. 2 includes a tuner 210 for tuning to a desired channel from a received analog broadcast signal, and a demodulator 220 for demodulating the tuned analog signal to obtain a digital signal. The demodulator 220 transmits conditional access related data, such as key information and program watching authority information, to a Conditional Access System (CAS) 260.

When a subscriber selects a program, the CAS 260 determines whether the subscriber is authorized to watch the selected program based upon program watching authority information. If the subscriber is authorized to watch the selected program, the CAS 260 allows encoded broadcast data to be descrambled or decoded according to key information.

When the demultiplexer 230 receives the digital broadcast data decoded by the CAS 260, it demultiplexes the digital broadcast data so as to convert it into MPEG broadcast data. When the demultiplexer 230 outputs broadcast data, video data is in an MPEG 2 format and audio data is in an MPEG 1 format.

An MPEG decoder 240 converts output data from the demultiplexer 230 into a broadcast signal through MPEG decompression, and a graphic module 250 manipulates the converted broadcast signal for display on digital TVs. The manipulated broadcast signal is converted into an analog signal by an encoder (not shown), and then transmitted to the digital TVs.

A status information display unit 280 serves to display the running status of the digital broadcast receiving system. The status information includes currently displayed channel number, time information, and so forth.

A controller 270 interacts with the status information display unit 280, and generates and transmits status information to the status information display unit 280, which is to display the status information. The controller 270 also controls display steps in which the status information display unit 280 displays individual digits, and controls whole digits to be repeatedly displayed by a predetermined number. Alternatively, the status information display unit 280 may be designed to execute such a display function of the controller 270.

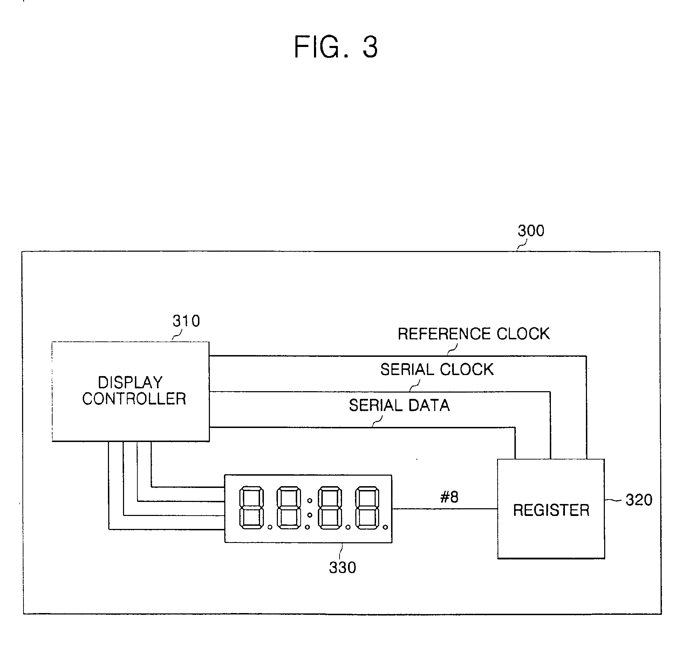

FIG. 3 is a block diagram illustrating a status display device of the invention.

The status display device 300 includes a display controller 310; a register 320 and a display panel 330.

The display panel 330 displays the running status of a system or apparatus on which the status display device is mounted, and is mainly constructed of segments. The display panel 330 of FIG. 3 includes, but is not limited to, four seven-segments elements. For example, the display panel 330 may have segments of different type and/or different number. The display device shown in FIG. 3 is only an embodiment. A register 320 functions to convert input serial data to parallel data, and to store and output the data.

The display controller 310 generates and manages information to be outputted to the segments of the display panel 330. Also, the display controller 310 transmits a control signal for controlling the display panel 330 and the register 320 by using General Purpose Input/Output Pin (GPIO), which is an input/output pin used for general purposes.

The display controller 310 also receives serial data via a GPIO line from a main processor of a system or apparatus to which the display controller 310 is attached. The display controller 310 converts the received serial data into parallel data by using the shift register 320. The parallel data generated by the shift register 320 is displayed on the segments as letters, numbers or diagrams. The display controller 310 also supplies a "clock set" signal to the display panel 330 so as to select a segment of the panel to display data.

The display controller 310 supplies three signals to the register 320. These signals include serial data containing each digit information, a serial clock in use for serial data transmission and a reference clock which instructs digit information transmitted to the register 320 to be displayed. A clock set in use for segment selection is supplied by the display controller 310 to the display panel 330.

Upon receiving display information converted into serial data via the serial clock, the register 320 converts the serial display information to parallel data. After having received and converted information for one segment, the register 320 receives a display instruction signal via a reference clock, and sends eight bit parallel data to the display panel 330. Based upon a clock set signal provided via the display controller 310, a segment of the panel 330 on which corresponding eight bit parallel data is to be displayed is selected.

Alternatively, a display unit including all components of the register 320 and the display panel 330 may be implemented. In this case, the display controller 310 will supply all of serial data, serial clock, reference clock and clock set to the display unit.

When the segment control unit of FIG. 3 is applied to a digital broadcast receiver, the display controller 310 may be included in the controller 270 or the status information display unit 280.

While the embodiment of FIG. 3 has been described with the display panel having four segments, the number of segments may be much larger than this to such an extent that displaying sequentially on each segment cannot be sufficiently repeated. Then, it may be preferable to increase the number of registers so as to adjust the residual image effect so that residual images are satisfactory to see. That is, while the embodiment proposes using one register, the number of display panel segments can be increased, with at least two registers used. Since it is more efficient to use a register individually for each segment, the advantageous effect of the invention can still be maintained.

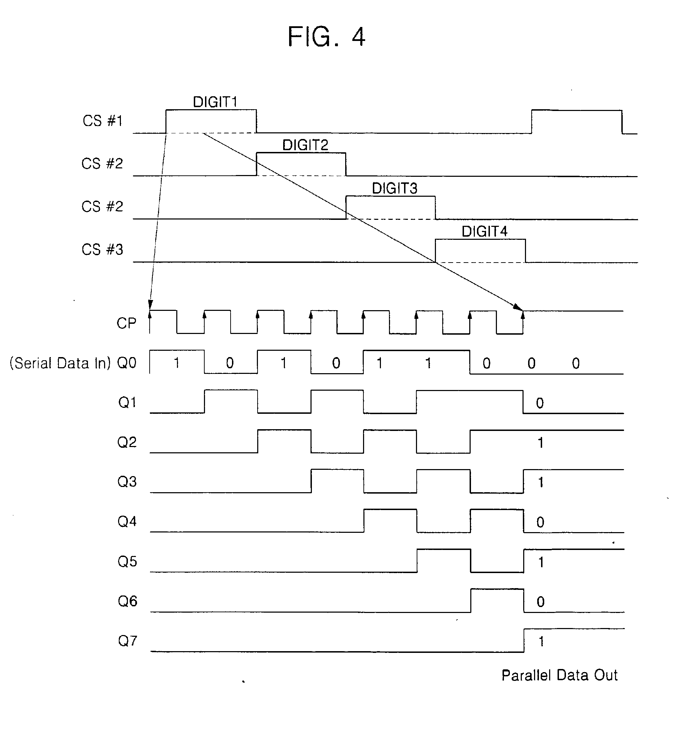

FIG. 4 is a diagram illustrating clock timing for display control of the invention.

FIG. 4 shows in their order clock set signals CS #1, CS #2, CS #3 and CS #4 used for the selection of individual segments, a clock pulse CP used for the supply of clocks, serial data supplied from the display controller 310 to the register 320, and serial data Q0, Q1, Q2, Q3, Q4, Q5, Q6 and Q7 outputted as converted from the register.

Provided that information to be displayed on the first segment is expressed as "10101100", CS #1 set by "1" is supplied to the display panel 330 in order to select segment
1. The display controller 310 also supplies a clock signal (CP) shown in FIG. 4 to the display panel 340, and transmits "10101100" data to the display panel 330 on serial data transmitting GPIO.

Upon receiving "10101100" serial data via clock transmitting GPIO and serial data transmitting GPIO, the register 320 outputs input serial data via eight parallel pins by shifting the serial data one by one. The format of serial data can be seen in FIG. 4 wherein Q0, in which serial data are inputted first and parallel data are outputted first, is expressed in the same manner as serial data format. That is, Q0 output is changed in the order of "1", "0", " 1 ", "0", "1", "1", "0" and "0" whenever one period of an input clock passes.

When one clock period has passed, only Q0 has an output value of "1", but Q1 to Q7 do not have any output value. When two clock periods have passed, Q0 outputs "0" and Q1 outputs "1." When serial data are shifted up to Q7 in such a way as to pass through eight (8) clock periods, a first bit of serial data is outputted via Q7, a second bit of serial data is outputted via Q6, and other bits are outputted sequentially via Q5 to Q0. As a result, when reading output data starting from Q7 as the highest bit up to Q0, it will be understood that data in the form of "10101100" is arrayed in parallel.

When generated in the register 320 as described above, parallel data are given to the display panel 330 at a point in time when the "ON" signal of a reference clock (not shown) is supplied, and then the display panel 330 displays the given data.

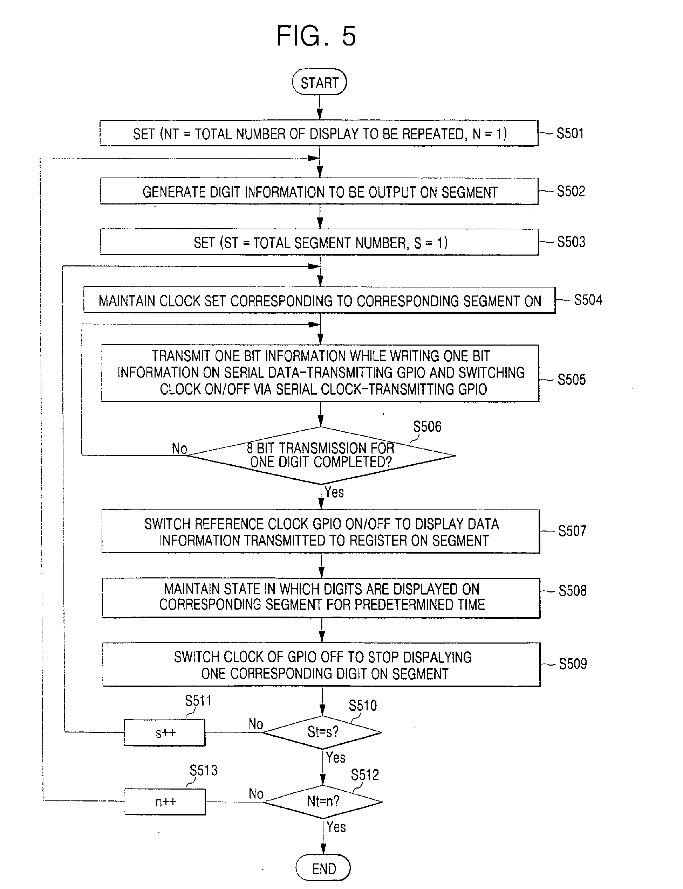

FIG. 5 is a flowchart illustrating a display segment control process using a single register according to an embodiment of the invention.

First, in S501, the display controller 210 executes initialization for initial value designation and variable setting for the purpose of repetition display control. Nt is a number designating how many times whole digital data are to be displayed, and n is used as variable indicating total displaying number. Initially, n is set to 1.

In S502, the display controller 210 generates digit information to be displayed on whole segments. In S503, St is set to the number of whole displaying segments and s is set to 1 for a process to control one time display on the panel. Herein, s indicates the sequence of a digit under the current display control process of all of the segments.

Upon the completion of initialization, a clock set of a corresponding digit out of GPIO for supplying clock set to the display segments 230 is maintained "ON" in S504. In this state, one bit information is transmitted on serial data-transmitting GPIO, and clock is supplied by serial bit-transmitting GPIO for the purpose of corresponding bit information transmission in S505. Procedure S505 is repeated until eight bit transmission for expressing one digit is completed in S506. Upon completion of data transmission for expressing one digit, reference clock is given for the display of one digit data information transmitted from the display controller 210 to the register on one segment in S507, in which reference clock is used as an instruction signal for received information display. The display of one digit is maintained for a predetermined period of time in S508. Upon expiration of the predetermined period of time, clock inputted via clock set-providing GPIO for a corresponding segment is switched OFF in S509. That is, clock set #1 signal shown in FIG. 4 is converted from "1" to "0."

Then, display of one digit is completed, and a variable s value is compared to an St value in S510. If they are not equal, the s value is increased by 1 in S511, and then steps S504 to S509 are repeated to display the second digit. This process is repeated as many times as the number of digits to be expressed on the display panel.

When the s value becomes St, that is, when all of the segments to be displayed are displayed once, a determination is made as to whether the variable n, indicating overall display repetition number, is the same as an Nt value in S512. If not, the n value is increased in S513, and during this step S513, the display of whole digits in S502 to S511 is repeated. Display of whole digits is repeated until the n value becomes Nt. Nt is preferably set to about 60 to 100 times per second, considering residual image effects.

When displayed according to the above control process, all of the individual digits appear to be continuously displayed due to residual image effects, although the individual digits are sequentially repeated about 60 to 100 times per second.

As described hereinbefore, the invention can carry out display operations on several display panels with only one register by using a control clock. As a result, cost of an apparatus using display segments is minimized.

While the present invention has been shown and described in connection with the preferred embodiments, it will be apparent to those skilled in the art that modifications and variations can be made without departing from the spirit and scope of the invention as defined by the appended claims.

## Claims

1. An apparatus for controlling display segments, comprising:
a display unit for displaying input data to be displayed sequentially according to each segment of a display panel; and
a controller for supplying to the display unit data to be displayed on each segment of the display panel, and for controlling the data to be displayed according to each segment of the display panel in a predetermined time period, whereby data is repeatedly displayed a predetermined number of times.

2. The apparatus for controlling display segments according to claim 1, wherein the data is displayed at a rate in a range of 60 to 100 times per second.

3. The apparatus for controlling display segments according to claim 1, wherein the display unit includes:
a register for outputting the input data to be displayed by converting the input data from serial format to parallel format; and
a display panel for displaying data of parallel format inputted from the register sequentially according to each segment.

4. The apparatus for controlling display segments according to claim 1, wherein the controller supplies to the display unit at least one of a clock used for selection of a displaying segment, serial data including information to be displayed on a segment, a clock pulse used for transmission of serial data, and a reference clock including a display instruction signal relating to display data for each segment.

5. The apparatus for controlling display segments according to claim 4, wherein said at least one signal supplied to the display unit is transmitted via a General Purpose Input/Output Pin (GPIO).

6. A digital broadcast receiving system for displaying data to be displayed on each segment of a display panel which displays a running status, said system displaying the data sequentially according to said each segment of the display panel for a predetermined time period, and said system repeatedly displaying the data for said each segment a pre-determined number of times.

7. The digital broadcast receiving system according to claim 6, wherein said system displays the data for said each segment at a rate in a range of 60 to 100 times per second.

8. The digital broadcast receiving system according to claim 6, wherein repeated displaying is carried out by using at least one of a clock used for the selection of a displaying segment, serial data including information to be displayed on a segment, a clock pulse used for transmission of serial data, and a reference clock including a display instruction signal relating to display data for said each segment.

9. A method for controlling display segments, comprising the steps of:
supplying data to be displayed to each segment of a display panel; and
displaying the supplied data sequentially according to said each segment of the display panel for a predetermined time period;
wherein the supplying step and the displaying step are performed repeatedly a predetermined number of times with respect to all of the segments to be displayed.

10. The method for controlling display segments according to claim 9, wherein the displaying step is performed at a rate in a range of 60 to 100 times per second.

11. The method for controlling display segments according to claim 9, wherein the supplying step employs a clock used for selection of a displaying segment, serial data including information to be displayed on one segment, and a clock pulse used for transmission of serial data.

12. The method for controlling display segments according to claim 11, wherein the displaying step uses a reference clock including a display instruction signal relating to display data for said each segment.
